# EUROPÄISCHE PATENTANMELDUNG

(11) **EP 1 323 467 A1**
(43) Veröffentlichungstag der Anmeldung: **02.07.2003**
(21) Anmeldenummer: 01130406.0
(22) Anmeldetag: 20.12.2001
(51) Int. Cl.: B01J 19/32, B01D 3/00, B01D 53/18

(54) **Vorrichtung für den Stoff- und/oder Energieaustausch in einer Rieselkolonne**

(71) Anmelder: Manteufel, Rolf P. C., 38667 Bad Harzburg (DE)
(72) Erfinder: Manteufel, Rolf P. C., 38667 Bad Harzburg (DE)
(74) Vertreter: Fuchs Mehler Weiss & Fritzsche

(57) **Zusammenfassung**

Im Gegensatz zu bisherigen Entwicklungen für maximale Trennstufenzahlen für den Stoffund/oder Energieaustausch wird eine Vorrichtung für maximale Dampf- bzw. Gasdurchsätze beschrieben, bei der große vertikale Strömungsräume zur Verfügung stehen. Dämpfe bzw. Gase strömen ohne Stoßverluste und damit mit geringstem Druckverlust / m im Gegenstrom zur Flüssigkeit an vertikal nebeneinander angeordneten gekröpften Drähten bzw. Fäden, mit üblichen Web- bzw. Flechtmaschinen gefertigten, grobmaschigen Gewebebahnen entlang und werden mit der Flüssigkeit zum Austausch gebracht.

Gleichzeitig wird durch Optimierung der Draht- bzw. Fadendurchmesser und deren Anzahl und der Anordnung der Gewebebahnen unter Beachtung der großen vertikalen Strömungsräume und einer gleichförmigen Benetzung der großen Anzahl der an den Wellenbergen vertikal nebeneinander angeordneter gekröpfter Drähte bzw. Fäden von grobmaschigen Geweben für den Dampf- bzw. Gasstrom und durch eine stufenweise Aufteilung der ablaufenden Flüssigkeit ein minimales spezifisches Volumen der Vorrichtung erzielt.

## Beschreibung

Die Erfindung betrifft eine Vorrichtung für den Stoff- und/oder Energieaustausch. nach dem Oberbegriff des Patentanspruchs 1.

Bei einer solchen Vorrichtung müssen zur optimalen Nutzung die zum Austausch zu bringenden Phasen im Gegenstrom bei möglichst großer Phasengrenzfläche und kleinstem Energieverlust (Δp/m) geführt werden. Eine große Phasengrenzfläche kann durch eine große Anzahl vertikal durch die Vorrichtung geführter Drähte bzw. Fäden erreicht werden, wobei die an diesen ablaufende Flüssigkeit ständig erneuert wird und sich im direkten Gegenstrom zur aufsteigenden Phase befindet.

Die hierfür gleichförmige Strömung der Flüssigkeit erfordert eine ebenfalls gleichförmige Aufgabe am Kopf aller Drähte bzw. Fäden. Jede Mengenverschiebung bedeutet Maldistribution, wobei bereits bei einer Abweichung der einzelnen Abläufe untereinander von ± 50 % es zu einer Verdopplung der erforderlichen Austauschfläche kommt und bei größeren Abweichungen die Austauschfläche praktisch keinen Einfluß mehr auf die Trennleistung hat.

Neben gleichförmigen Abläufen der Flüssigkeit müssen vertikale Strömungsräume für die aufsteigende zweite Phase zur Verfügung stehen, um maximale Geschwindigkeiten ohne Stoßverluste bis zum Anstauen der ablaufenden Flüssigkeitsschichten zu erreichen.

Bei der Weiterentwicklung der Vorrichtungen nach den Patentanmeldungen PCT/EP 00/07756 und der Patentschrift WO 01/87448A1 zeigte sich, daß sich der dort beschriebene räumliche Aufbau der Draht- bzw. Fadenpackung auch aus grobmaschigen Geweben zusammensetzen läßt und Maschenweiten bestimmter Abmessung gebildet werden können, die sich auf herkömmlichen Web- oder Flechtmaschinen fertigen lassen, wenn in der Ausbildung und in der Anordnung bestimmte Maßnahmen beachtet werden.

Erfindungsgemäß liegen die Gewebebahnen unter Berührung aneinander. Und zwar wenden grobmaschige Gewebe eingesetzt, die, auf den Einbauzustand in der Kolonne bezogen, senkrecht verlaufende gekröpfte Drähte oder Fäden, bzw. Gruppen von Drähten oder Fäden aufweisen, die einen maschenbildenden Abstand voneinander aufweisen, vorzugsweise von etwa 3 - 20 mm.

Die Drähte und Fäden, und zwar sowohl in Kettrichtung wie auch in Schußrichtung können monophil wie auch multiphil ausgebildet sein. Der Einfachheit halber wird in der weiteren Beschreibung nur noch von Drähten gesprochen.

Die angesprochenen senkrechten Drähte sind in der Regel die Kettdrähte. In bevorzugter Ausführungsform verlaufen bei den verwendeten Geweben die Kettdrähte nicht geradlinig sondern in Ebenen senkrecht zur Gewebefläche gekröpft, gewellt oder anderweitig krummlinig. Dagegen verlaufen bei einer derart bevorzugten Ausführungsform die horizontalen Drähte, in der Regel Schußdrähte, geradlinig oder auch gekröpft. Das führt dazu, daß die Kettdrähte, indem sie hin und her um die Schußdrähte geführt werden, verhältnismäßig stark ausgelenkt sind, so daß das Gewebe bei gleichdicken Kett- und Schußdrähten die dreifache Drahtdicke aufweist, nämlich zweimal die Dicke der Kettdrähte und einmal die Dicke des Schußdrahtes. Die Erfindung ist jedoch auf diese spezielle Ausführungsform des Gewebes nicht festgelegt.

Bei der vorstehend beschriebenen Ausbildung sind die Kettdrähte abwechselnd zur einen und anderen Seite des Gewebes ausgewölbt. Erfindungsgemäß werden nun zwei oder mehrere Gewebebahnen so miteinander in Berührung gebracht, daß sich die einander zugewandten Auswölbungen der Kettdrähte benachbarter Gewebebahnen berühren. Dadurch werden die Mittelebenen der Gewebebahnen, insbesondere deren Schußdrähte, in einem Abstand voneinander gehalten. Die vorstehend geschilderte Berührung kann dadurch erreicht werden, daß Gewebebahnen jeweils spiegelbildlich in Berührung gebracht oder um eine Maschenweite versetzt gegenüber der benachbarten Gewebebahn angeordnet werden. Es ist nicht erforderlich, daß sämtliche Kettdrahtauswölbungen der Gewebbahnen miteinander in Berührung stehen. Es reicht aus, wenn es ein maßgeblicher Anteil solcher Stellen ist.

Die Stabilität der Berührungsstellen wird in einer besonderen Ausführungsform dadurch besser gewährt, daß jeweils zwei senkrechte gewellte Drähte unmittelbar nebeneinander angeordnet werden. Dann kann nämlich der Kettdraht einer benachbarten Gewebebahn mit seiner Auswölbung zwischen die Auswölbungen des Doppeldrahtes der benachbarten Gewebebahn zu liegen kommen, wodurch eine stabile Lage erreicht wird. Bei Einzeldrähten kann die Lage unstabil sein, wenn die aneinanderliegenden Kettdrahtauswölbungen dazu neigen, von ihren gegenseitigen Scheitelpunkten abzunutschen. Eine weitere Möglichkeit zur Erhöhung der Stabilität ist die Anordnung von Gewebebahnen mit unmittelbar nebeneinander liegenden Kettdrähten alternierend mit Bahnen bei denen die Kettdrähte einzeln vorliegen. Dabei kommen die einzelnen Kettdrähte jeweils zwischen den Auswölbungen der direkt nebeneinander liegenden Kettdrähte benachbarter Bahnen zum liegen, wodurch ebenfalls eine stabile Lage erreicht wird.

Die benachbarten Gewebebahnen sind zweckmäßigerweise in ihrer Berührungslage fixiert. Dies kann durch unterschiedliche Mittel erreicht werden. Beispielsweise sind die Bahnen in einer Mehrzahl von Punkten miteinander verknüpft, beispielsweise durch Fäden. Je nach Material können aber auch punktförmige Verschweißungen oder Clips vorgesehen sein. Auf die Weise lassen sich Pakete von zwei oder mehr Gewebebahnen erzeugen. Durch die sich immer wieder im senkrechten Verlauf berührenden Kettdrähte, die im Maschenabstand im Gewebe angeordnet sind werden praktisch durchgehende vertikale Strömungskanäle zwischen benachbarten Längsdrähten gebildet, die einen Weg für die aufsteigende Reaktionsphase darstellen.

Nun ist es nicht erforderlich, daß sich hinter jeder Auswölbung eines Kettdrahtes ein Schußdraht befindet. Insbesondere bei steifem Drahtmaterial können die Kettdrähte gewellt sein und nur im Abstand von mehreren Wellen durch einen Schußdraht verbunden sein. In bevorzugter Ausführungsform werden die nur in größeren Abstand voneinander vorgesehenen Schußdrähte benachbarter Gewebe so angeordnet, daß sie in senkrechter Richtung gegeneinander versetzt sind. Durch eine solche lockere Anordnung wird auch die Querströmung des aufsteigenden Mediums durch die Gewebe begünstigt. Der Querschnitt der gebildeten senkrechten Strömungskanäle hängt einerseits von der Maschenweite, dem senkrechten Abstand der Kettdrähte voneinander und andererseits von der Drahtdicke ab. Diese liegt vorzugsweise im Bereich von 1 -3 mm.

Bestimmend für die Anzahl der Drähte und deren Abmessungen und Abständen zueinander sind bei einer möglichst großen Drahtoberfläche die verbleibenden vertikalen Strömungsräume. Es ist hierbei ein Optimum zwischen der Anzahl der Drähte bzw. Fäden und deren Abmessung und Anordnung in der Vorrichtung zum Erzielen eines geringen Druckverlusts (Δp/m) für die aufsteigende leichtere Phase zu finder. Die Austauschfläche selbst ist durch den benetzten Umfang der Drähte gegeben und wächst so mit deren Durchmesser und ihrer Anzahl. Andererseits werden durch deren Anordnung die freien Strömungsräume bestimmt, wobei mit der Anzahl der Drähte und speziell mit deren Durchmesser die freien Strömungsräume kleiner werden und der Material bedarf zunimmt.

Um die Packungen auch durch Mannlöcher montieren zu können, werden die üblicherweise mit ca. 2 - 3 m Breite gefertigten Gewebebahnen in Streifen von 200 - 300 mm Breite aufgeteilt und nebeneinander zu Packungen gewünschter Länge aneinandergefügt.

Bestimmend für die gleichmäßige Benetzung aller Drähte ist, die in der Vorrichtung zu verteilende Flüssigkeit so aufzuteilen, daß jeder Draht gleichförmig mit Flüssigkeit versorgt wird. Dies kann zweckmäßigerweise nur stufenweise entsprechend der im einzelnen zu verteilenden Flüssigkeitsmengen erfolgen.

Wegen der verhältnismäßig kleinen Flüssigkeitsmengen je Draht ist eine spezielle Flüssigkeitsverteilung erforderlich. So werden die einzelnen Gewebebahnen mit ihren oberen Drahtenden an Verteilungsrinnen aufgehängt. Zweckmäßigerweise werden die Rinnen so in Abschnitte unterteilt, daß Zuführungsrohre die Rinnenabschnitte eines Packungsblocks sicher versorgen können.

Die Zuführungsrohre eines Packungsblocks sind in einem Verteilertopf zusammengefaßt, der durch eine übergeordnete Verteilerspinne je nach Größe der Vorrichtung versorgt wird.

In den Ablaufrinnen sind waagerechte Lochbleche mit seitlich verlaufenden Schlitzen oder Gewebe angebracht, die die durch die Zuführungsrohre einlaufende Flüssigkeit den einzelnen Drähten der Gewebebahnen von unten zuführen. Hierdurch wird eine gleichmäßige Flüssigkeitsaufteilung sichergestellt. Die Lochbleche können gleichzeitig zum Verklemmen der in die Ablaufrinnen gehängten Drähte dienen.

Sowohl die Ablauföffnungen des Verteilertopfes als auch der Verteilerspinne sind kalibriert und es wird jede Ablauföffnung für sich von unten gespeist, indem um jede Öffnung ein Zuführungskanal durch ein Blechgitter oder Rohre gebildet wird.

Die unteren Drahtenden der Gewebebahn sind in offene Rinnen geführt, die die ablaufende Flüssigkeit sammeln und in weitere Ablaufrinnen oder einen Ringkanal abführen.

Für die Extraktion oder andere Verfahren, bei denen eine flüssige Phase von unten nach oben durch die Vorrichtung geführt werden soll, ist sinngemäß die beschriebene Verteilervorrichtung umgekehrt am unteren Ende der Vorrichtung anzubringen.

Die Vorrichtung wird anhand eines Ausführungsbeispiels gemäß den folgenden Zeichnungen erläutert.
Fig. 1: Einbau der kompletten Vorrichtung in einen zylindrischen Behälter
Fig. 2: Verteilertopf mit Schnittbild
Fig. 3: Aufhängung der Bahnen in der Verteilerrinne
Fig. 4: Seitenansicht einer Verteilerrinne mit Gewebebahn und Verteilertopf
Fig. 5: Einzelner Packungsblock mit Verteilertopf und Zuführungsrohren
Fig. 6: Anordnung mehrerer Blöcke in einem großen zylindrischen Behälter

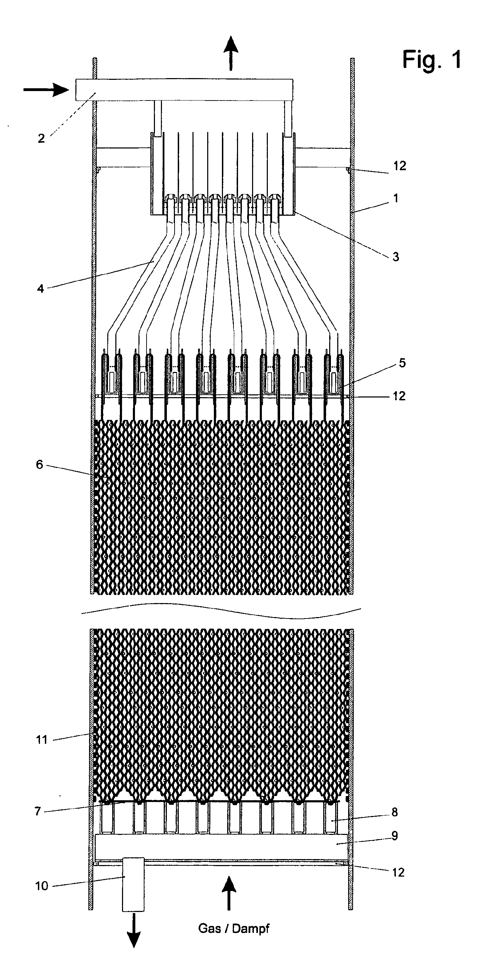

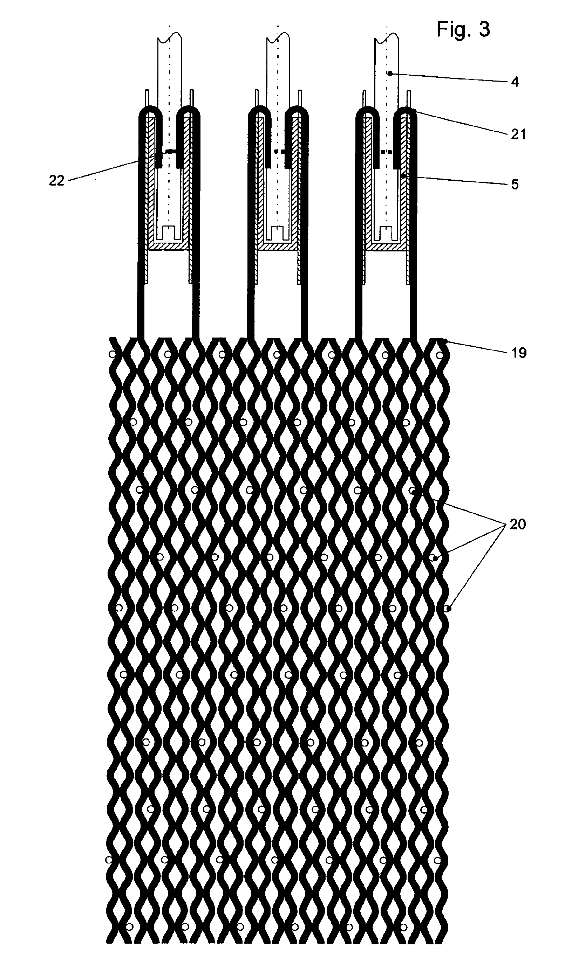

Fig. 1 zeigt als Beispiel den Einbau der Vorrichtung in einen zylindrischen Behälter 1 (Kolonne). Die Flüssigkeit tritt durch ein Zulaufrohr 2 in die Vorrichtung ein und wird durch Rohre in den Verteilertopf 3 geführt. Dieser verteilt die Flüssigkeit über das in Fig. 3 gezeigte System gleichmäßig auf die Zuführungsrohre 4, welche in den Verteilerrinnen 5 enden. An diesen Rinnen aufgehängt ist ein Paket aus nebeneinander angeordneten Gewebebahnen 6. Die Flüssigkeit wird von den Rinnen 5 gleichförmig auf den Gewebebahnen aufgegeben und an diesen nach unten geführt. Die einzelnen Gewebebahnen sind derart nebeneinander angeordnet, daß sie sich an den Wellenbergen der vertikalen Drähte berühren und so die Flüssigkeit von Bahn zu Bahn übergehen kann. Die Länge der Bahnen kann dem jeweiligen Einsatzzweck angepaßt werden. Am unteren Enden steht der Block aus den Gewebebahnen auf einem Halterprofil 7, welches auf mehreren horizontal verlaufenden Ablaufrinnen 8 befestigt ist. Die an den vertikalen Drähten ablaufenden Flüssigkeit wird in diesen Rinnen gesammelt und in darunterliegende größere Rinnen 9 abgeführt. Von dort aus verläßt die Flüssigkeit die Vorrichtung z.B. über ein Rohr 10.

Beim Betrieb der Vorrichtung strömt von unten ein Gas oder Dampf im Gegenstrom zur Flüssigkeit durch die Vorrichtung. An der Wand des zylindrischen Behälters 1 ist ein feinmaschiges Drahtgewebe 11 angebracht, welches vollflächig an der Behälterwand anliegt. Der Verteilertopf 3, die Verteilerrinnen 5 sowie die Ablaufrinnen 8 sind mit Haltern 12 befestigt. Je nach Anwendungsfall können mehrere dieser Vorrichtungen übereinander angebracht sein, um einen Teilabzug bzw. eine ergänzende Zufuhr der Flüssigkeit zwischen den einzelnen Vorrichtungen zu ermöglichen.

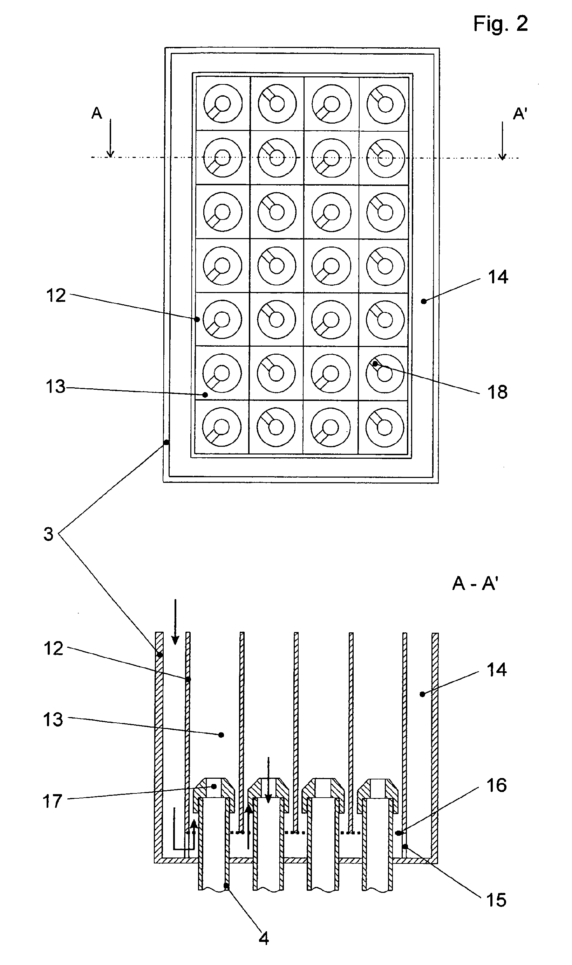

Fig. 2 zeigt den Verteilertopf 3 von oben und in einem Schnittbild. Der Topf ist durch Bleche 12 in einzelne Kammern 13 unterteilt. Die Flüssigkeit strömt in den Außenraum 14 des Verteilertopfes ein und verteilt sich durch Ausschnitte 15 am unteren Ende der Bleche über die Grundfläche des Topfes. Durch ein Lochblech oder Gewebe 16 steigt die Flüssigkeit in die Kammern 13 auf und wird durch kalibrierte Ablauföffnungen 17 den einzelnen Zuführungsrohren 4 zugeteilt. Jede der kalibrierten Ablauföffnungen besitzt eine seitliche Nut 18, die das Fließverhalten bei kleinen Volumenströmen verbessert. Für jedes Zuführungsrohr 4 ist eine Kammer 13 mit kalibrierter Ablauföffnung 17 vorgesehen.

Fig. 3 zeigt die Aufhängung der Gewebebahnen in den Verteilerrinnen. Die einzelnen Gewebebahnen sind derart nebeneinander angeordnet, daß sich benachbarte Bahnen mit den gewellten vertikalen Drähten 19 berühren und die Querdrähte der einzelnen Bahnen 20 in verschiedenen Ebenen verlaufen, was den freien Querschnitt für den Dampf bzw. das Gas vergrößert.

Einige der Gewebebahnen sind länger. Die vertikalen Drähte 21 dieser Bahnen sind nach oben aus der Anordnung herausgeführt. Diese Drähte sind an den Enden umgebogen und in die zugehörige Verteilerrinne 5 eingehängt und können mit einem Lochblech oder Gewebestreifen 22 durch Klemmen fixiert sein. Das Lochblech bzw. der Gewebestreifen trennt die Verteilerrinne horizontal in zwei Kammern. Die Flüssigkeit tritt durch die Zuführungsrohre 4 in die untere Kammer. Durch den Druckverlust des Lochblechs bzw. Gewebestreifens wird die Flüssigkeit in der unteren Kammer über die Rinne verteilt und strömt der oberen Kammer gleichmäßig zu. Bei Erreichen einer bestimmten Stauhöhe in der Verteilerrinne läuft die Flüssigkeit an den eingehängten Drähten ab. An den Berührungspunkten der einzelnen gekröpften Gewebebahnen teilt sich die Flüssigkeit auf und verteilt sich so gleichmäßig über die nebeneinander hängenden Längsdrähte des Packungsblocks.

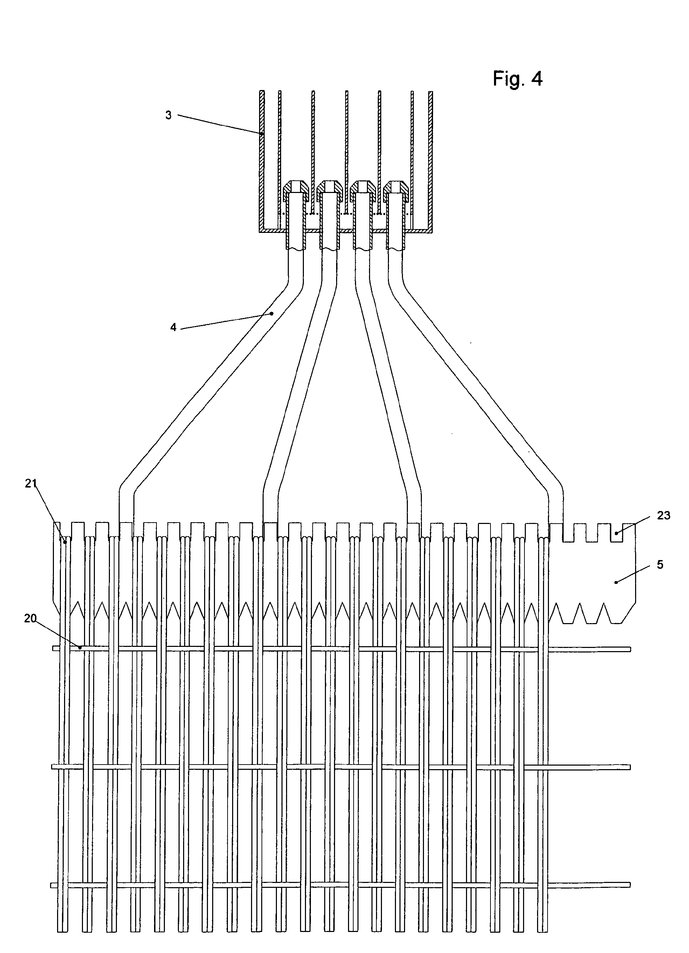

Fig. 4 zeigt eine Verteilerrinne in der Seitenansicht mit einem Schnitt durch die zugehörigen Kammern des Verteilertopfs und einer eingehängten grobmaschigen Gewebebahn. Auf der rechten Seite ist ein Teil der vertikalen Drähte 21 nicht gezeichnet um das Aussehen der Verteilerrinne 5 besser zu zeigen. Die Rinne hat an der Oberseite rechteckige Schlitze 23, in die die Drähte 21 eingehängt werden. Die Unterseite läuft zur Mitte eines jeden Drahtpaares hin spitz zu und verhindert so das Abtropfen der Flüssigkeit zwischen den eingehängten Drähten 21. Die Rinne ist innen in mehrere Abschnitte unterteilt, jeder Abschnitt wird von einem Zuführungsrohr 4 versorgt.

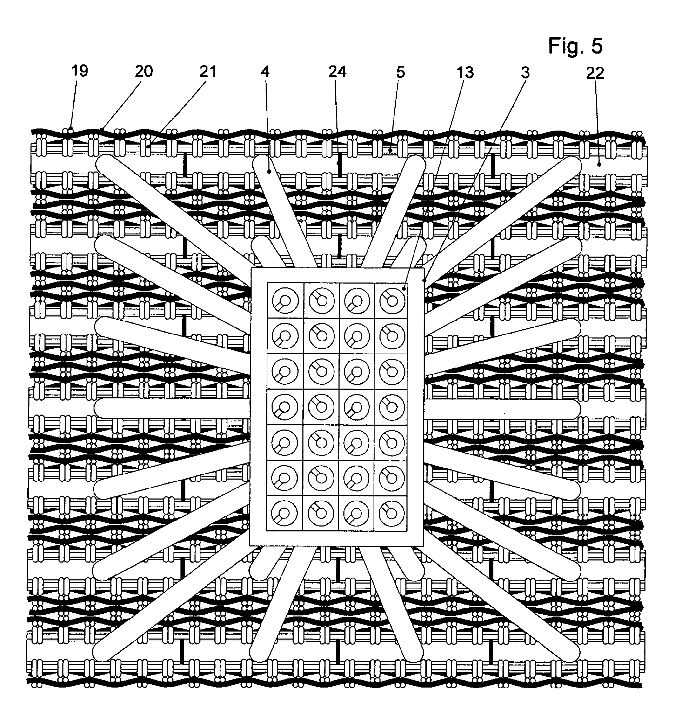

Fig. 5 zeigt einen rechteckigen Packungsblock mit zugehörigem Verteilertopf 13 von oben. Die horizontalen Querdrähte 20 der einzelnen Gewebebahnen sind schwarz gezeichnet, die vertikal verlaufenden Drähte 19 als weiße Kreise. Ein Teil der Gewebebahnen ist wie oben beschrieben mit ihren umgebogenen Drahtenden 21 in die Verteilerrinnen 5 eingehängt und kann mit dem Lochblech oder Gewebestreifen 22 fixiert sein. Trennwände 24 unterteilen die Verteilerrinnen in einzelne Segmente, von denen jeder von einem separaten Zuführungsrohr 4 mit Flüssigkeit versorgt wird. Jedem Zuführungsrohr und damit jedem Segment der Verteilerrinne ist eine Kammer 13 im Verteilertopf 3 zugeordnet.

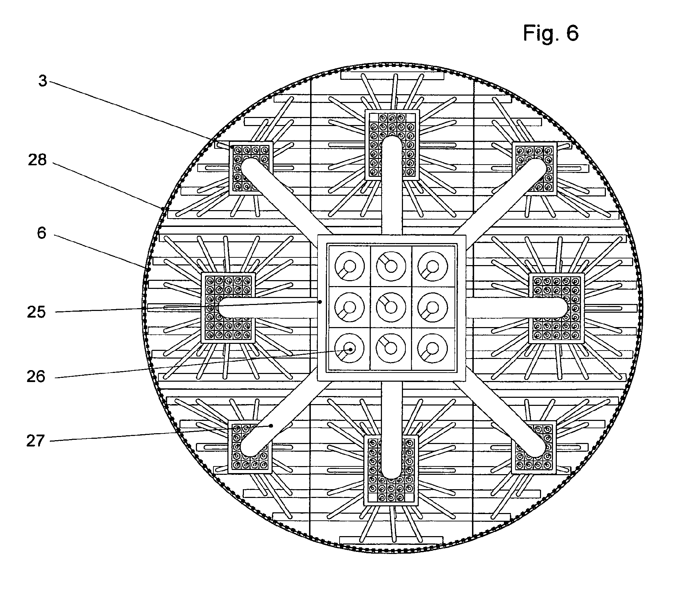

Um zylindrische Behälter großen Durchmessers mit der beschriebenen Vorrichtung auszurüsten, werden mehrere der in Fig. 5 gezeigten Blöcke nebeneinander eingebaut. Fig. 6 zeigt eine solche Anordnung für neun Einzelblöcke. Jeder der Blöcke besitzt einen eigenen Verteilertopf 3. Die Versorgung dieser Verteilertöpfe erfolgt in der oben beschriebenen Weise durch einen übergeordneten Verteilertopf 25 über entsprechend größere kalibrierte Ablauföffnungen 26 und Zuführungsrohre 27. An der Behälterwandung 28 ist, wie auch in Fig. 1 für einen kleinen Behälterdurchmesser gezeigt, eine feinmaschiges Drahtgewebe 6 vollflächig eingebaut, welches die an der Behälterwand ablaufende Flüssigkeit verteilt.

## Patentansprüche

1. Vorrichtung für den Stoff- und / oder Energieaustausch in einer Rieselkolonne mit dreidimensionalen Draht- bzw. Fadenpackungen in Form von parallel angeordneten Geweben, **dadurch gekennzeichnet, daß**
grobmaschige Gewebe (6) auf den Einbauzustand in der Kolonne (1) bezogen senkrecht und im Abstand voneinander verlaufende gekröpfte Drähte bzw. Fäden (19) oder Gruppen dieser Drähte bzw. Fäden (19) enthalten und die Gewebe (6) derart angeordnet sind, daß benachbarte Gewebe an den Wellenbergen der gekröpften Drähte bzw. Fäden (19) miteinander in Berührung stehen und aufgrund der Maschenweite der zueinander im Abstand verlaufenden Drähte bzw. Fäden (19) oder Gruppen dieser Drähte bzw. Fäden (19) im wesentlichen durchgehende vertikale Strömungskanäle gebildet werden.

2. Vorrichtung nach Anspruch 1, **dadurch gekennzeichnet, daß** die einzelnen Gewebebahnen (6) mit ihren oberen Draht- bzw. Fadenenden (21) in Verteilerrinnen (5) hängen.

3. Vorrichtung nach Anspruch 1 oder 2, **dadurch gekennzeichnet, daß** die senkrechten Drähte bzw. Fäden (19) Dicken kleiner als 3 mm aufweisen.

4. Vorrichtung nach mindestens einem der Ansprüche 1 - 3, **dadurch gekennzeichnet, daß** die Maschenweiten der Gewebe, nämlich Abstand zwischen den senkrechten Drähten bzw. Fäden (19) 3 - 20 mm beträgt.

5. Vorrichtung nach einem der Ansprüche 1 - 4, **dadurch gekennzeichnet, daß** die aneinandergefügten Gewebebahnen (6) in begrenzte Packungsblöcke mit zugeordneten Verteilungsrinnen (5) aufgeteilt sind.

6. Vorrichtung nach einem der Ansprüche 1 - 5, **dadurch gekennzeichnet, daß** jeder Packungsblock einen Verteilertopf (3) für Flüssigkeit hat, der seine Verteilerrinnen (5) speist.

7. Vorrichtung nach einem der Ansprüche 1 - 6, **dadurch gekennzeichnet, daß** in den Verteilungsrinnen (5) für sie Flüssigkeit waagerechte Beruhigungsflächen (16) angeordnet sind.

8. Vorrichtung nach einem der Ansprüche 1 - 7, **dadurch gekennzeichnet, daß** die Verteilertöpfe (3) der einzelnen Packungsblöcke von übergeordneten Verteilertöpfen gespeist werden.

9. Vorrichtung nach einem der Ansprüche 1 - 8, **dadurch gekennzeichnet, daß** die Ablauföffnungen (17) der Verteilertöpfe (3) untereinander durch Trennbleche (12) oder Rohrstücke getrennt sind und die Ablauföffnungen (17) von unten gespeist werden.

10. Vorrichtung nach einem der Ansprüche 1 - 9, **dadurch gekennzeichnet, daß** die Draht- bzw. Fadenenden der Gewebebahn (6) in offene Rinnen (10) geführt sind.

11. Vorrichtung nach einem der Ansprüche 1 - 10, **dadurch gekennzeichnet, daß** die offenen Rinnen (9) in Verbindung mit unter ihnen befindlichen Ablaufrinnen stehen oder in einen Ringkanal geführt sind.

12. Vorrichtung nach einem der Ansprüche 1 - 11, **dadurch gekennzeichnet, daß** an der Innenwand der Vorrichtung oder um die Reaktionspackung eine Gewebefläche angebracht ist.

13. Vorrichtung nach einem der Ansprüche 1 - 12, **dadurch gekennzeichnet, daß** die Drähte bzw. Fäden (19) der Packung elektrisch leitend oder wärmeleitend und/oder katalytisch aktiv ausgeführt sind.

14. Vorrichtung nach einem der Ansprüche 1 - 13, **dadurch gekennzeichnet, daß** die Drähte bzw. Fäden (19) der Packung aus einem metallischen oder nichtmetallischen Material, insbesondere einem Kunststoff, Glasfasern oder Kohlefasern bestehen.

15. Vorrichtung nach einem der Ansprüche 1 - 14, **dadurch gekennzeichnet, daß** die einzelnen oder parallel zueinander angeordneten Drähte bzw. Fäden (19) monophil oder multiphil ausgebildet sind, aus versponnenen Fasern (Filamenten) bestehen, verdrillt oder gespreizt ausgebildet sind oder eine bestimmte Struktur aufweisen wozu auch Maschenketten zu rechnen sind.
